# EUROPÄISCHE PATENTSCHRIFT

(11) **EP 2 388 155 B1**
(45) Veröffentlichungstag und Bekanntmachung des Hinweises auf die Patenterteilung: **14.11.2012**
(21) Anmeldenummer: 11166302.7
(22) Anmeldetag: 17.05.2011
(51) Int. Cl.: B60C 25/138, G01M 1/36

(54) **Vorrichtung und Verfahren zur Änderung der Drehwinkellage eines Luftreifens auf einer Felge**
Device and method for changing the rotational angle position of a pneumatic tyre on a wheel rim
Dispositif et procédé de modification de la position d'angle de rotation d'un pneu sur une jante

(30) Priorität: 19.05.2010 DE 102010017031
(43) Veröffentlichungstag der Anmeldung: 23.11.2011
(73) Patentinhaber: Schenck RoTec GmbH, 64293 Darmstadt (DE)
(72) Erfinder: Lemser, Matthias, 64331, Weiterstadt (DE); Lipponer, Georg, 64673, Zwingenberg (DE); Steitz, Karl-Heinz, 55129, Mainz (DE); Rogalla, Martin, 64297, Darmstadt (DE); Peinelt, Andreas, 64319, Pfungstadt (DE)
(74) Vertreter: Haar, Lucas Heinz Jörn

(56) Entgegenhaltungen:
- EP-A1- 2 236 321
- EP-A2- 2 075 564
- DE-A1- 3 344 737
- US-A- 5 826 319

## Beschreibung

Die Erfindung betrifft eine Vorrichtung und ein Verfahren zur Änderung der Drehwinkellage eines Luftreifens gegenüber einer Felge, wobei der Luftreifen auf der Felge montiert ist und mit Reifenwülsten an Sitzflächen der Felge anliegt. Die Vorrichtung umfasst eine Spannvorrichtung zum Halten der Felge, eine Messeinrichtung zum Messen und Speichern der Drehwinkellage von Markierungsmerkmalen an der Felge und an dem Luftreifen, eine Auswerte- und Steuerungseinheit, welche einen Drehwinkel berechnet, und einen positionierbaren Drehantrieb, der durch die Auswerte- und Steuerungseinheit steuerbar ist.

Vorrichtungen der angegebenen Art werden zum sogenannten Matchen von Luftreifen und Felge verwendet. Das Matchen ist ein bei der Reifenmontage eingesetztes Verfahren, welches dazu dient, die Rundlaufeigenschaften des Rades zu optimieren. An den Reifen und an den Felgen werden bei der Herstellung Markierungen, sogenannte Matchpunkte, angebracht, die Extremstellen der gemessenen Rundlaufabweichungen kennzeichnen. Der Matchpunkt kennzeichnet beim Luftreifen das Maximum der ersten harmonischen Radialkraftschwankung und bei der Felge die Stelle der Rundlaufabweichung mit dem kleinsten Radius. Werden die markierten Stellen an Reifen und Felge zueinander gebracht, so erreichen die Rundlaufeigenschaften des Rades einen günstigen Wert.

In der Serienfertigung von Fahrzeugrädern wird ein Matchen von Reifen und Felge dann durchgeführt, wenn die Erfüllung der Qualitätsanforderungen es erfordert. Für die Durchführung des Matchvorgangs ist beispielsweise aus DE 10 2004 006 822 A1 eine Maschine bekannt, in der die Felge eines montierten Rades mittels einer Spanneinheit gespannt wird, die Markierungen an Reifen und Felge mittels eines Kamerasystems erfasst werden, durch Eindrücken der Reifenflanken die Reifenwülste von der Felge gelöst werden und dann durch Drehen der Felge mittels der drehbaren Spanneinheit um einen errechneten Drehwinkel gedreht wird, so dass die Markierungen von Reifen und Felge auf derselben Drehwinkelposition liegen.

Aus EP 2 236 321 A1 ist eine Vorrichtung nach dem Oberbegriff des Patentanspruchs 1 bekannt. Die Vorrichtung ist stationär angeordnet und weist einen Ständer mit vertikalen Säulen auf, zwischen denen eine Bandfördereinrichtung zum Zu- und Abfördern eines Rades hindurchgeführt ist. Oberhalb und Unterhalb der Fördereinrichtung sind in dem Rahmen durch individuelle Antriebe radial verstellbare Backen zum Abdrücken der Reifenwülste angeordnet, wobei die oberen Backen axial verstellbar sind. Unterhalb der Fördereinrichtung befindet sich außerdem eine drehbare Spannvorrichtung mit radial bewegbaren Backen zum Spannen und Drehen der Felge.

Aus US 5 826 319 A ist eine weitere in eine Bandfördereinrichtung integrierte Vorrichtung zur Änderung der Drehwinkellage eines Luftreifens gegenüber einer Felge bekannt, die stationär angeordnet ist und eine vertikal bewegbare und drehbare Spannvorrichtung zum Spannen der Felge und auf gegenüberliegenden Seiten der Bandfördereinrichtung Abdrückvorrichtungen mit drehbaren Abdrückhebeln aufweist, die auf entgegengesetzten Seiten an den Luftreifen andrückbar sind. Die Abdrückvorrichtungen sind hierbei ortsfest in dem Rahmen der Vorrichtung angeordnet.

Bei einer aus DE 33 44 737 A1 bekannten stationären Vorrichtung zum Verbessern des Laufverhattens von Fahrzeugrädern wird der Reifenwulst von beiden Seiten von je einer Abdrückeinrichtung von dem Scheibenrad abgedrückt und das in einer drehbaren Spannvorrichtung gespannte Scheibenrad gegenüber dem Reifen um einen vorgegebenen Winkelbetrag verdreht. Die Abdrückeinrichtungen haben drehbare Rollen, die mittels mindestens einer Antriebseinheit gegensinnig um das Rad herum bewegt werden.

Aus EP 2 075 564 A2 ist ein Verfahren und eine Vorrichtung zur optimierten Fertigung von Fahrzeugrädern durch Matchen bekannt, wobei die Winkellage der maximalen Radialkraftschwankung des Reifens und die Winkellage des Minimalwertes der Rundlaufabweichung der Felge ermittelt werden und daraus die Match-Winkellage von Reifen und Felge bestimmt wird. Zur winkelgerechten Montage der Felge und des Reifens dient eine programmgesteuerte Handhabungsvorrichtung mit einem dreidimensional steuerbaren Greiferarm, durch den zunächst die Felge winkelgerecht auf einen Montagetisch gefördert und anschließend der Reifen erfasst und in der errechneten Winkellage mit dem oberen Reifenwulst in das Felgenbett gedrückt wird.

Der Erfindung liegt die Aufgabe zugrunde, eine Vorrichtung der eingangs genannten Art zu schaffen, welche kostengünstig herstellbar ist, einfach in eine Anlage zur serienweisen Herstellung von Fahrzeugrädern integriert werden kann, und welche die mit dem Matchen verbundenen Förderaufgaben vereinfacht.

Die Aufgabe wird efindungsgemäß durch eine Vorrichtung mit den in Anspruch 1 angegebenen Merkmalen gelöst. Vorteilhafte Ausgestaltungen der Vorrichtung sind in den Ansprüchen 2 bis 10 angegeben. Ein vorteilhaftes Verfahren nach der Erfindung ist in den Ansprüchen 10 und 11 angegeben.

Nach der Erfindung umfasst die Vorrichtung zur Änderung der Drehwinkellage eines Luftreifens gegenüber einer Felge, wobei der Luftreifen auf der Felge montiert ist und mit Reifenwülsten an Sitzflächen der Felge anliegt, eine Spannvorrichtung zum Halten der Felge, eine Messeinrichtung zum Messen und Speichern der Drehwinkellage von Markierungsmerkmalen an der Felge und an dem Luftreifen, eine Auswerte- und Steuerungseinheit, welche einen Drehwinkel berechnet, einen positionierbaren Drehantrieb, der durch die Auswerte- und Steuerungseinheit steuerbar ist, und eine Handhabungseinrichtung mit einem Greifer, wobei die Handhabungseinrichtung ein Roboter mit einem um mehrere Achsen bewegbaren Gelenkarm ist und der Greifer an einem freien Ende des Gelenkarms angebracht ist, gegenüber der Spannvorrichtung bewegbar ist und radial verstellbare Greiferfinger aufweist, und wobei an den Greiferfingern einander gegenüberliegende Abdrückvorrichtungen zum Abdrücken der Reifenwülste von den Sitzflächen der Felge angeordnet sind.

Mit der Vorrichtung nach der Erfindung kann ein Rad zur Änderung der Drehwinkellage des Luftreifens zu einer Spannvorrichtung zum Halten der Felge gefördert, nach dem Spannen und Halten der Felge der Reifen durch Abdrücken der Reifenwülste gelöst, anschließend gedreht und dann das Rad z.B. zu einer Füllstation oder Abfördereinrichtung weiter gefördert werden. Die Vorrichtung nach der Erfindung kann andererseits auch ohne Anwendung der Förderfunktion des Greifers vorteilhaft eingesetzt werden, wenn geeignete Fördereinrichtungen vorhanden sind, um das Rad in die Spannvorrichtung hinein und aus dieser heraus zu fördern. In diesem Fall ist von Vorteil, dass der Greifer aus dem Bereich der Spannvorrichtung entfernt werden kann, wenn Keine Matchvorgänge benötigt werden. Die Vorrichtung nach der Erfindung ist einfach, da die Bewegungsfunktionen des Greifers und der Handhabungseinrichtung auch zum Durchführen des Matchens genutzt werden.

Vorzugsweise ist die Spannvorrichtung feststehend und der Greifer gegenüber der Handhabungseinrichtung durch den Drehantrieb um eine zentrale Achse positionierbar. Dies ermöglicht eine sehr einfache Gestaltung der Spannvorrichtung und die Verwendung von in Anlagen bereits vorhandenen Spannvorrichtungen, die nicht mit einem positionierbaren Drehantrieb versehen sind.

Die Handhabungseinrichtung kann ein Roboter mit einem um mehrere Achsen bewegbaren Gelenkarm sein, an dessen freiem Ende der Greifer angebracht ist. Weiterhin kann an dem freien Ende des Gelenkarms der Drehantrieb angeordnet sein, der zum Drehen des Greifers eingerichtet ist. Alternativ kann der Greifer an einer Drehung um seine zentrale Achse gehindert und die Spannvorrichtung durch den Drehantrieb drehbar und positionierbar sein. Die letztere Variante ist vorteilhaft, wenn eine Handhabungseinrichtung verwendet wird, die nicht über einen geeigneten Drehantrieb zum Drehen und Positionieren des Greifers verfügt.

Nach einem weiteren Vorschlag der Erfindung kann die Abdrückvorrichtung starr am Greifer befestigte Abdrückelemente aufweisen, wobei der Greifer zum Abdrücken eines Reifenwulstes mittels der Handhabungseinrichtung axial an die Felge heran bewegbar ist. Diese Ausgestaltung ist kostengünstig und nutzt vorteilhaft die Bewegbarkeit und Kraft der Handhabungseinrichtung.

Weiterhin können wenigstens die auf einer Seite des Reifens angeordneten Abdrückvorrichtungen durch Aktoren gegen den Reifen bewegbare Abdrückelemente aufweisen. Mit Hilfe dieser bewegbaren Abdrückelemente ist es nicht nur möglich, einen Reifenwulst von der Sitzfläche der Felge abzudrücken, sondern der Reifen kann auch im Zusammenwirken mit den Abdrückelementen auf der entgegengesetzten Seite des Reifens so verdrehfest gehalten werden, dass er beim Verdrehen des Greifers oder der Felge seine Drehwinkelstellung gegenüber dem Greifer nicht verändert.

Eine vorteilhafte Ausgestaltung des Greifers weist einen Grundkörper und wenigstens zwei radial zur Mittelachse des Greifers bewegbare Greiferarme auf, wobei die Greiferarme mit einer Synchronisiereinrichtung gekoppelt sind, welche die radiale Bewegung der Greiferarme synchronisiert. Hierdurch ist gewährleistet, dass der Greifer beim Öffnen und Schließen der Greiferarme seine zentrale Lage zu dem gehaltenen Rad oder Reifen nicht verändert, was die genaue Steuerung der Greiferbewegung sehr vereinfacht.

Die Greiferfinger sind vorzugsweise an den freien Enden von bewegbaren Greiferarmen angeordnet und weisen zur Mittelachse des Greifers parallele Halteplatten auf, die zur Anlage an der Lauffläche eines Luftreifens ausgebildete Abschnitte haben. Die freien Enden der Halteplatten können nach der Erfindung mit einer rechtwinklig zur Greifermitte hin gerichteten Abbiegung versehen sein, an der vorzugsweise starre Abdrückelemente angeordnet sind.

Die Greiferfinger können weiterhin in einem Abstand von den Abbiegungen und parallel zu diesen sich in Richtung der Greifermitte erstreckende Platten aufweisen, an denen Aktoren und durch diese bewegbare Abdrückelemente befestigt sind.

Die Erfindung wird nachfolgend anhand eines/von Ausführungsbeispiels/en näher erläutert, das/die in der Zeichnung dargestellt ist/sind. Es zeigen
- Figur 1: eine Seitenansicht einer Vorrichtung nach der Erfindung mit Handhabungsroboter, Greifer und Spannvorrichtung,
- Figur 2: eine Schnittansicht des Greifers der Vorrichtung gemäß Figur 1.

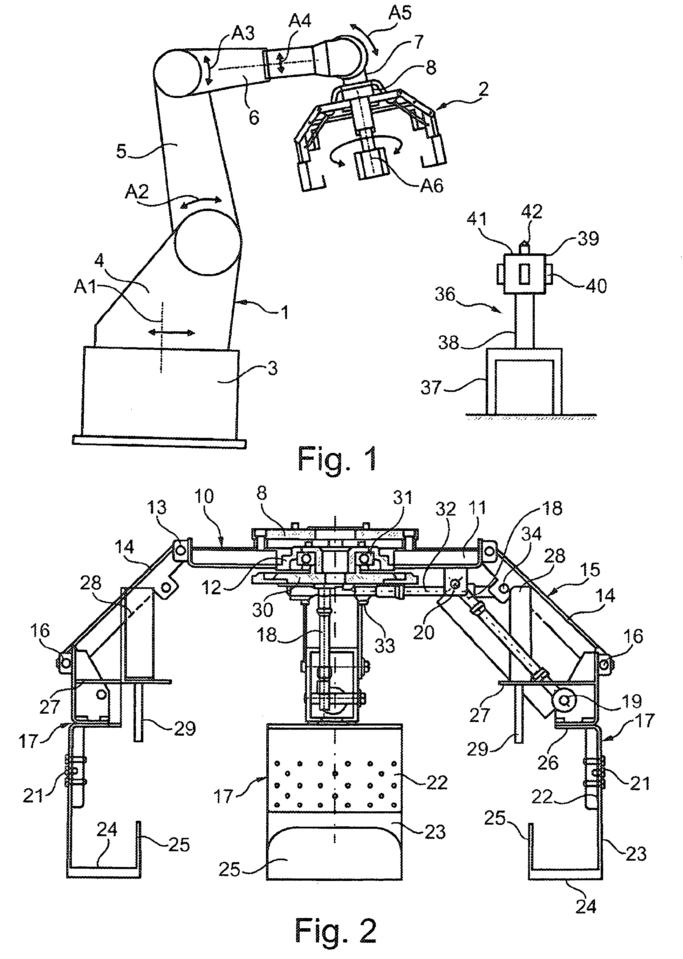

Die in Figur 1 gezeigte Vorrichtung umfasst einen Handhabungsroboter 1 und einen durch diesen bewegbaren Greifer 2, der zum Greifen und Halten von Luftreifen eingerichtet ist. Der Handhabungsroboter 1 besteht aus einem feststehenden Grundgestell 3, auf dem sich um eine senkrechte Achse A1 ein Karussell 4 mit einer Schwinge 5, einem Arm 6 und einer Roboterhand 7 dreht. Die Schwinge 5 ist an dem Karussell 4 um eine waagrechte Achse A2 und der Arm 6 ist an der Schwinge 5 um eine waagrechte Achse A3 drehbar. Der Arm 6 besteht aus zwei Teilen, die relativ zueinander um eine in Längsrichtung des Arms 6 verlaufende Achse A4 drehbar sind. Die Roboterhand 7 ist mit dem Arm 6 um eine quer zur Längsachse des Arms 6 verlaufende Achse A5 drehbar verbunden. An ihrem freien Ende hat die Roboterhand 7 einen um eine Achse A6 drehbaren Flansch 8. Alle Achsen A1 bis A6 des Handhabungsroboters 1 sind durch gesteuerte Servomotoren antreibbar. In die Servomotoren sind Bremsen und Resolver zur Drehwinkelmessung integriert. Der Roboter ist mit einer Steuerung ausgerüstet, die frei programmierbar ist und durch die jede der vorgenannten Achsen individuell in eine beliebige Drehwinkelstellung bewegbar und in dieser feststellbar ist.

Der in Figur 2 deutlicher dargestellte Greifer 2 hat einen kreuzförmigen Grundkörper 10 mit vier Armen 11, die sich von einem zentralen Ringkörper 12 radial nach außen erstrecken. An den radial äußeren Enden der Arme 11 sind mittels Drehgelenken 13 äußere Lenker 14 von Greiferarmen 15 schwenkbar gelagert. An den freien Enden der Lenker 14 sind mittels Drehgelenken 16 Greiferfinger 17 schwenkbar gelagert. Die Achsen der Drehgelenke 13 und 16 eines jeden Lenkers 14 sind parallel und verlaufen in Bezug auf die Mittelachse des Greifers 2 tangential und in einer radialen Ebene. Auf der der Greifermitte zugekehrten Seite der Lenker 14 sind in einem parallelen Abstand von diesen innere Lenker 18 angeordnet, die jeweils mit einem Ende durch ein Drehgelenk 19 mit einem Greiferfinger 17 und mit dem anderen Ende durch ein Drehgelenk 20 mit einem Arm 11 verbunden sind. Der Abstand der Drehgelenke 19 von der Achse der Drehgelenke 16 ist gleich dem Abstand der Drehgelenke 20 von der Achse der Drehgelenke 13. Weiterhin ist der Abstand der Drehgelenke 19 und 20 im Wesentlichen gleich dem Abstand der Achsen der Drehgelenke 13 und 16. Hierdurch bilden die Lenker 14, 18 eine schwenkbare Parallelführung, durch die der mit den Lenkern verbundene Greiferfinger 17 beim Öffnen und Schließen des Greifers 2 seine vorgegebene Ausrichtung zur Mittelachse des Greifers 2 beibehält.

Die Greiferfinger 17 haben jeweils eine zur Mittelachse des Greifers 2 im Wesentlichen parallel ausgerichtete Halteplatte 21, die sich in einer von der Achse 16 entfernenden Richtung erstreckt. Die Halteplatte 21 hat einen zur Anlage an der Lauffläche eines Luftreifens bestimmten, achsennahen Abschnitt 22, der mit Noppen versehen ist, und einen achsenfernen Abschnitt 23. Das freie Ende des Abschnitts 23 ist mit einer rechtwinklig zur Greifermitte hin gerichteten Abbiegung 24 versehen, die ein zum Grundkörper hin gerichtetes, plattenförmiges Abdrückelemente 25 trägt. Am Befestigungsende der Halteplatte 21 ist eine sich radial nach innen und senkrecht zu dieser verlaufende eine Anlagefläche 26 ausgebildet, mit der sich der Greifer an einer Seitenwand eines Luftreifens abstützen kann.

An den Greiferfingern 17 sind außerdem in der Nähe der Drehgelenke 16, 19 sich in Richtung der Greifermitte erstreckende Platten 27 befestigt, die Aktoren 28 und durch diese in Richtung der Abdrückelemente 25 bewegbare Abdrückelemente 29 tragen. Die Aktoren 28 können Pneumatikzylinder, Hydraulikzylinder oder elektrisch angetriebene Linearmotoren sein.

Zum Öffnen und Schließen des Greifers müssen die Greiferarme 15 synchron auseinander oder zueinander bewegt werden. Zur Erzeugung dieser synchronen Bewegung ist eine drehbare Scheibe 30 vorgesehen, die mit Hilfe eines Vierpunkt-Wälzlagers 31 in der zentralen Öffnung des Ringkörpers 12 drehbar gelagert ist. Die Scheibe 30 ist mit jedem Greiferarm 15 durch ein stangenförmiges Kuppelglied 32 verbunden. Die Kuppelglieder 32 sind gleich lang und tragen an ihren Enden Gelenke 33, 34 mit wenigstens zwei Freiheitsgraden, insbesondere Kugelgelenke. Mit dem Gelenk 33 sind die Kuppelglieder 32 an der Scheibe 30 befestigt. Die Gelenke 33 sind hierbei in einem Winkelabstand von 90° und im gleichen Abstand von der Drehachse der Scheibe 30 angeordnet. Mit den Gelenken 34 sind die Kuppelglieder 32 in einem Abstand von der Achse der Drehgelenke 13 an den äußeren Lenkern 14 befestigt. Wird die Scheibe 30 gedreht, so bewegen sich die Kuppelglieder 32 in Bezug auf die ihnen benachbarten Arme 11 des Grundkörpers 10 in radialer Richtung, wodurch die an den Armen 11 gelagerten Greiferarme 15 eine Schwenkbewegung in der entsprechenden Richtung ausführen.

Zum Greifen eines Rades wird der Greifer 2 durch gesteuertes Drehen der Scheibe 30 mit Hilfe eines nicht dargestellten Servoantriebs in eine Offenstellung bewegt, in der der Abstand der einander gegenüberliegenden Abdrückelemente 25 größer ist als der Außendurchmesser des zu greifenden Luftreifens des Rades. Durch die Parallelführung der Greiferfinger 17 sind die Halteplatten 21 unabhängig von der Öffnungsstellung des Greifers 2 parallel zur Greifermittelachse ausgerichtet, so dass sie sich gleichmäßig an die Umfangsfläche des Reifens anlegen, wenn der Greifer 2 geschlossen wird. Um die Halteplatten 21 mit dem Reifen in Kontakt zu bringen, wird die Scheibe 30 durch den Servoantrieb in der Gegenrichtung gedreht. Hierdurch bewegen sich die Greiferarme 15 synchron in Richtung der Mittelachse des Greifers 2, bis sie eine Stellung erreichen, in der die Anlageflächen 26 und die Halteplatten 21 mit den Abschnitten 22 an dem Luftreifen zur Anlage kommen.

Der Greifer 2 ist an der Roboterhand 7 so angeordnet, dass er relativ zur Roboterhand 7 um seine mit der Achse A6 übereinstimmende Mittelachse gedreht und drehwinkelgenau positioniert werden kann. Hierzu ist der Ringkörper 12 des Greifers 2 an dem Flansch 8 der Roboterhand 7 befestigt, der mit Hilfe des an der Roboterhand 7 angeordneten Servomotors in beliebige Drehwinkelstellungen bewegt und in diesen festgestellt werden kann. Auf diese Weise ist es möglich, mit Hilfe des Greifers 2 einen von diesem gehaltenen Reifen um seine Rotationsachse in eine bestimmte Drehwinkelstellung zu drehen, um beispielsweise einen an dem Reifen markierten Matchpunkt in dieselbe Drehwinkelstellung zu drehen, die ein Matchpunkt an der zugeordneten Felge einnimmt.

Eine Spannvorrichtung 36 zum Spannen einer Felge ist in Figur 1 schematisch gezeigt. Auf einem Tisch 37 ist ein säulenartiger Ständer 38 angeordnet, der an seinem oberen Ende ein Spannfutter 39 mit radial bewegbaren Spannbacken 40 trägt. Das Spannfutter hat auf der Oberseite eine Auflagefläche 41 und einen zentralen Zentrierdorn 42, der in die Felgenbohrung eingreift. Die Spannbacken 40 werden von einem im Ständer 38 angeordneten, pneumatischen Hubzylinder über einen innen liegenden Spannkeil betätigt und legen sich an die Innenfläche der Felgenschüssel an.

Mit der beschriebenen Vorrichtung kann das sogenannte Matchen durch gezielte Änderung der Drehwinkellage eines Luftreifens gegenüber der Felge, auf der er montiert ist, wie folgt durchgeführt werden:

Das aus Felge und Luftreifen bestehende Rad wird zunächst in eine Spannvorrichtung zum Spannen und Halten der Felge gefördert. Bei der Felgenspannvorrichtung kann es sich um ein einfaches Spannfutter mit mehreren elastisch verformbaren Kunststoffbacken handeln, welche auf der Innenseite an die Felgenschüssel angedrückt werden. Selbstverständlich können auch andere Felgenspannvorrichtungen, beispielsweise solche, die die Felge in der Mittenbohrung spannen, verwendet werden. Die Förderung des Rades in die Spannvorrichtung kann mit Hilfe des Greifers 2 und des Handhabungsroboters 1 durchgeführt werden, es können aber auch andere Fördereinrichtungen, beispielsweise ein Hubschrittförderer, hierfür vorgesehen sein.

Nachdem die Felge gespannt ist, wird mit Hilfe einer Messeinrichtung, beispielsweise einem Kamerasystem, die Lage der Matchpunkte an Reifen und Felge gemessen und mittels einer Auswerte- und Steuerungseinheit der Differenzdrehwinkel zwischen den Matchpunkten berechnet. War das Rad zuvor mit Hilfe des Greifers 2 in die Spannvorrichtung gefördert worden, so muss für diesen Messvorgang der Greifer 2 von dem Rad entfernt werden.

Im nächsten Schritt führt der Handhabungsroboter 1 den Greifer 2 zentrisch über das Rad und in axialer Richtung in eine Position, in der die Abdrückelemente 25, 29 des Greifers 2 außerhalb der seitlichen Begrenzungsebenen des Rades liegen. Der Greifer wird dann durch synchrones Bewegen der Greiferarme 15 und Greiferfinger 17 in Richtung der Greifermitte auf den Durchmesser der Felge so eingestellt, dass die Abdrückelemente 25, 29 sich in einer zum Abdrücken geeigneten Position in einem Abstand von dem Felgenrand befinden. Der Greifer 2 wird dann durch den Handhabungsroboter 1 in axialer Richtung so bewegt, dass sich der Grundkörper 10 des Greifers 2 um eine vorgegebene Strecke von dem Rad entfernt. Hierdurch kommen die starren Abdrückelemente 25 mit dem ihnen benachbarten Reifenwulst in Eingriff und drücken diesen von der Sitzfläche auf der Felge ab. Sobald die Abdrückposition erreicht ist, bleibt der Greifer stehen und es werden als nächstes die Aktoren 28 der Abdrückelemente 29 in Tätigkeit versetzt. Hierdurch drücken die Abdrückelemente 29 den ihnen benachbarten zweiten Reifenwulst von der Sitzfläche auf der Felge ab. Der Luftreifen ist nun allein von dem Greifer 2 mit Hilfe der Abdrückelemente 25, 29 gehalten und kann daher mit Hilfe des Greifers 2 leicht gedreht werden.

Im nächsten Schritt wird von der Auswerte- und Steuerungseinheit der Servomotor in der Roboterhand 7 angesteuert und der Greifer 2 um den zuvor aufgrund der Matchpunkterkennung berechneten Differenzdrehwinkel gedreht, so dass nach der Drehung beide Matchpunkte dieselbe Drehwinkelstellung einnehmen. In dieser Stellung des Greifers 2 werden durch Umsteuerung der Aktoren 28 die Abdrückelemente 29 in ihre Ausgangsstellung zurückgefahren. Gleichzeitig bewegt der Handhabungsroboter 1 den Greifer 2 in die Anfangsstellung zurück, in der die starren Abdrückelemente 25 von dem Luftreifen abgehoben sind. Zur anschließenden Kontrolle des Matchvorgangs wird der Greifer 2 wieder geöffnet und durch den Handhabungsroboter 1 von dem Rad entfernt. Bestätigt die Kontrollmessung, dass das Ergebnis des Matchvorgangs in Ordnung ist, so wird die Spannvorrichtung von der Felge gelöst und das Rad aus der Spannvorrichtung herausgefördert, was wiederum mit Hilfe des Greifers und des Handhabungsroboters oder einer anderen Fördereinrichtung erfolgen kann.

Die beschriebene Vorrichtung zeichnet sich durch eine einfache und kostengünstige Maschinenausführung aus, welche die Funktionen eines Handhabungsroboters üblicher Bauweise nutzt, wobei die Förderung des Rades in die Matchstation und die Bewegungsfunktionen in der Matchstation mit der gleichen Einrichtung, dem von dem Handhabungsroboter bewegten Greifer, ausgeführt werden können. Zum Spannen der Felge genügt eine einfache Spannvorrichtung ohne aufwendigen Antrieb, wie sie auch bei der Reifenmontage Anwendung findet.

## Patentansprüche

1. Vorrichtung zur Änderung der Drehwinkellage eines Luftreifens gegenüber einer Felge, wobei der Luftreifen auf der Felge montiert ist und mit Reifenwülsten an Sitzflächen der Felge anliegt, umfassend eine Spannvorrichtung (36) zum Halten der Felge, eine Messeinrichtung zum Messen und Speichern der Drehwinkellage von Markierungsmerkmalen an der Felge und an dem Luftreifen, eine Auswerte - und Steuerungseinheit, welche einen Differenzdrehwinkel berechnet, einander gegenüberliegende Abdrückvorrichtungen zum Abdrücken der Reifenwülste von den Sitzflächen der Felge und einen positionierbaren Drehantrieb, der durch die Auswerte- und Steuerungseinheit steuerbar ist, **gekennzeichnet durch** eine Handhabungseinrichtung (1) mit einem Greifer (2), wobei die Handhabungseinrichtung (1) ein Roboter mit einem um mehrere Achsen bewegbaren Gelenkarm (6) ist und der Greifer (2) an einem freien Ende des Gelenkarms (6) angebracht ist, gegenüber der Spannvorrichtung (36) bewegbar ist und radial verstellbare Greiferfinger (17) aufweist, und wobei an den Greiferfingern (17) die einander gegenüberliegende Abdrückvorrichtungen angeordnet sind.

2. Vorrichtung nach Anspruch 1, **dadurch gekennzeichnet, dass** die Spannvorrichtung (36) feststehend ist und der Greifer (2) gegenüber der Handhabungseinrichtung (1) durch den Drehantrieb um eine zentrale Achse drehbar und positionierbar ist.

3. Vorrichtung nach einem der Ansprüche 1 oder 2, **dadurch gekennzeichnet, dass** der Drehantrieb an dem freien Ende des Gelenkarms (6) angeordnet und zum Drehen des Greifers (2) um seine Mittelachse eingerichtet ist.

4. Vorrichtung nach Anspruch 1, **dadurch gekennzeichnet, dass** der Greifer (2) an einer Drehung um seine zentrale Achse gehindert ist und die Spannvorrichtung (36) durch den Drehantrieb drehbar und positionierbar ist.

5. Vorrichtung nach einem der vorhergehenden Ansprüche, **dadurch gekennzeichnet, dass** die Abdrückvorrichtungen wenigstens auf einer Seite des Reifens starr am Greifer befestigte Abdrückelemente (25) aufweisen und der Greifer (2) zum Abdrücken eines Reifenwulstes mittels der Handhabungseinrichtung (1) axial an die Felge heran bewegbar ist.

6. Vorrichtung nach einem der vorhergehenden Ansprüche, **dadurch gekennzeichnet, dass** wenigstens die auf einer Seite des Reifens angeordneten Abdrückvorrichtungen durch Aktoren (28) bewegbare Abdrückelemente (29) aufweist.

7. Vorrichtung nach einem der vorhergehenden Ansprüche, **dadurch gekennzeichnet, dass** der Greifer (2) einen Grundkörper (10) und wenigstens zwei radial zur Mittelachse des Greifers bewegbare Greiferfinger (17) aufweist, wobei die Greiferfinger (17) mit einer Synchronisiereinrichtung gekoppelt sind, welche die radiale Bewegung der Greiferfinger (17) synchronisiert.

8. Vorrichtung nach einem der vorhergehenden Ansprüche, **dadurch gekennzeichnet, dass** die Greiferfinger (17) an den freien Enden von bewegbaren Greiferarmen (15) angeordnet sind und zur Mittelachse des Greifers (2) parallele Halteplatten (21) aufweisen, die zur Anlage an der Lauffläche eines Luftreifens ausgebildete Abschnitte haben.

9. Vorrichtung nach Anspruch 8, **dadurch gekennzeichnet, dass** die starren Abdrückelemente (25) an freien Enden der Halteplatten (21) angeordnet sind.

10. Verfahren zur Änderung der Drehwinkellage eines Luftreifens gegenüber einer Felge, wobei der Luftreifen auf der Felge montiert ist und mit Reifenwülsten an Sitzflächen der Felge anliegt, umfassend folgende Schritte: Fördern eines Felge und Luftreifen aufweisenden Rades in eine Spannvorrichtung (36),
Spannen und Halten der Felge in der Spannvorrichtung (36),
Messen und Speichern der Drehwinkellage von Markierungsmerkmalen an der Felge und an dem Luftreifen mittels einer Messeinrichtung, Berechnen eines Differenzdrehwinkels mittels einer Auswerte- und Steuerungseinheit,
Umgreifen des Rades mit einem an einer Handhabungseinrichtung (1) angeordneten Greifer (2), der einen positionierbaren Drehantrieb und Abdrückvorrichtungen zum Abdrücken der Reifenwülste von der Felge aufweist, Abdrücken der Reifenwülste von den Sitzflächen der Felge mit Hilfe der Abdrückvorrichtungen des Greifers (2),
Drehen des Luftreifens mittels des Greifers (2) um den berechneten Differenzdrehwinkel durch Steuerung des Drehantriebs des Greifers (2) durch die Auswerte- und Steuerungseinheit.
Zurückbewegen der Abdrückvorrichtungen in die Ausgangslage und Lösen der Spannvorrichtung (36),
Abfördern des Rades aus der Spannvorrichtung, **dadurch gekennzeichnet, dass** das Rad mit Hilfe des Greifers (2) in die Spannvorrichtung (36) und/oder aus der Spannvorrichtung (36) gefördert wird.

11. Verfahren nach Anspruch 10, **dadurch gekennzeichnet, dass** das Abdrücken eines Reifenwulstes durch Heben und/oder Senken des Greifers (2) erfolgt.

## Claims

1. A device for changing the rotational angle position of a pneumatic tire relative to a wheel rim, with the pneumatic tire being fitted to the rim and resting with its tire beads against seating surfaces of the rim, comprising a clamping fixture (36) for holding the rim, a measuring device for measuring and storing the rotational angle position of markers on the rim and on the pneumatic tire, an evaluating and control unit which computes an angular difference, oppositely facing lift-off devices for unseating the tire beads from the seating surfaces of the rim and a positionable rotary drive mechanism which is controllable by the evaluating and control unit, **characterized by** a manipulating device (1) with a gripper (2) wherein the manipulating device (1) is a robot with a jointed arm (6) movable about several axes and the gripper (2) is mounted on a free end of the jointed arm (6), is movable relative to the clamping fixture (36) and has radially adjustable gripper fingers (17), and wherein the oppositely facing lift-off devices are arranged on the gripper fingers (17).

2. The device according to claim 1, **characterized in that** the clamping fixture (36) is fixed in place and the rotary drive mechanism enables the gripper (2) to be rotated and positioned relative to the manipulating device (1) about a central axis.

3. The device according to any one of claims 1 or 2, **characterized in that** the rotary drive mechanism is arranged at the free end of the jointed arm (6) and is designed to rotate the gripper (2) about its central axis.

4. The device according to claim 1, **characterized in that** the gripper (2) is prevented from rotating about its central axis, and the clamping fixture (36) is rotatable and positionable by the rotary drive mechanism.

5. The device according to any one of the preceding claims, **characterized in that** the lift-off devices include, at least on one side of the tire, lift-off elements (25) which are rigidly fastened on the gripper, and that the gripper (2) is movable up against the rim axially by means of the manipulating device (1) for unseating a tire bead.

6. The device according to any one of the preceding claims, **characterized in that** at least the lift-off devices arranged on one side of the tire include lift-off elements (29) movable by means of actuators (28).

7. The device according to any one of the preceding claims, **characterized in that** the gripper (2) includes a body (10) and at least two gripper fingers (17) movable radially to the central axis of the gripper, said gripper fingers (17) being coupled to a synchronizing device which synchronizes the radial movement of the gripper fingers (17).

8. The device according to any one of the preceding claims, **characterized in that** the gripper fingers (17) are arranged at the free ends of movable gripper arms (15) and include retaining plates (21) arranged parallel to the central axis of the gripper (2) and having portions configured for engagement with the tread of a pneumatic tire.

9. The device according to claim 8, **characterized in that** the rigid lift-off elements (25) are arranged at free ends of the retaining plates (21).

10. A method of changing the rotational angle position of a pneumatic tire relative to a wheel rim, with the pneumatic tire being fitted to the rim and resting with its tire beads against seating surfaces of the rim, comprising the following steps:
Loading a wheel comprising a rim and a pneumatic tire into a clamping fixture (36),
clamping and holding the rim in the clamping fixture (36),
measuring and storing the angular position of markers on the rim and on the pneumatic tire by means of a measuring device, calculating an angular difference by means of an evaluating and control unit,
gripping the wheel with a gripper (2) which is arranged on a manipulating device (1) and includes a positionable rotary drive mechanism and lift-off devices for unseating the tire beads from the rim,
unseating the tire beads from the seating surfaces of the rim by means of the lift-off devices of the gripper (2),
rotating the pneumatic tire through the calculated angular difference by means of the gripper (2) through control of the rotary drive mechanism of the gripper (2) by the evaluating and control unit,
returning the lift-off devices to the initial position and releasing the clamping fixture (36),
unloading the wheel from the clamping fixture, **characterized in that** the wheel is loaded into the clamping fixture (36) and/or unloaded from the clamping fixture (36) by means of the gripper (2).

11. The method according to claim 10, **characterized in that** unseating of a tire bead is effected by raising and/or lowering the gripper (2).

## Revendications

1. Dispositif pour modifier la position angulaire d'un pneumatique par rapport à une jante, le pneumatique étant monté sur la jante et reposant avec des talons de pneu contre des sièges de la jante, ledit dispositif comprenant un dispositif de serrage (36) destiné à retenir la jante, un dispositif de mesure destiné à mesurer et à mémoriser la position angulaire des caractéristiques de marquage sur la jante et sur le pneumatique, une unité d'analyse et de commande calculant un angle différentiel, des dispositifs de décollage opposés les uns aux autres destinés à détalonner les talons de pneu des sièges de la jante et un entraînement rotatif positionnable pouvant être commandé par l'unité d'analyse et de commande, **caractérisé par** un dispositif de manipulation (1) doté d'une pince (2), le dispositif de manipulation (1) étant un robot doté d'un bras articulé (6) mobile autour de plusieurs axes et la pince (2) étant disposée sur une extrémité libre du bras articulé (6), étant mobile par rapport au dispositif de serrage (36) et comprenant des doigts de préhension (17) radialement réglables, et les dispositifs de décollage opposés les uns aux autres étant disposés sur les doigts de préhension (17).

2. Dispositif selon la revendication 1, **caractérisé en ce que** le dispositif de serrage (36) est fixe et la pince (2) peut être positionnée et tournée autour d'un axe central par rapport au dispositif de manipulation (1) au moyen de l'entraînement rotatif.

3. Dispositif selon la revendication 1 ou 2, **caractérisé en ce que** l'entraînement rotatif est disposé sur l'extrémité libre du bras articulé (6) et conçu pour faire tourner la pince (2) autour de son axe médian.

4. Dispositif selon la revendication **1, caractérisé en ce que** la pince (2) est empêchée de tourner autour de son axe central et le dispositif de serrage (36) peut être entraîné en rotation par l'entraînement rotatif et positionné.

5. Dispositif selon l'une quelconque des revendications précédentes, **caractérisé en ce que** les dispositifs de décollage comprennent au moins sur un côté du pneu des éléments de décollage (25) fixés rigidement sur la pince, et la pince (2) peut être rapprochée axialement de la jante au moyen du dispositif de manipulation (1) pour détalonner un talon de pneu.

6. Dispositif selon l'une des revendications précédentes, **caractérisé en ce qu'**au moins les dispositifs de décollage disposés sur un côté du pneu comprennent des éléments de décollage (29) pouvant être déplacés par des actionneurs (28).

7. Dispositif selon l'une des revendications précédentes, **caractérisé en ce que** la pince (2) comprend un corps de base (10) et au moins deux doigts de préhension (17) mobiles radialement par rapport à l'axe médian de la pince, les doigts de préhension (17) étant couplés à un dispositif de synchronisation synchronisant le mouvement radial des doigts de préhension (17).

8. Dispositif selon l'une des revendications précédentes, **caractérisé en ce que** les doigts de préhension (17) sont disposés sur les extrémités libres de bras de préhension mobiles (15) et comprennent des plaques de retenue (21) parallèles à l'axe médian de la pince (2) et présentant des parties conçues pour être en appui contre la surface de roulement d'un pneumatique.

9. Dispositif selon la revendication **8, caractérisé en ce que** les éléments de décollage rigides (25) sont disposés sur les extrémités libres des plaques de retenue (21). ).

10. Procédé pour modifier la position angulaire d'un pneumatique par rapport à une jante, le pneumatique étant monté sur la jante et reposant avec des talons de pneu contre des sièges de la jante, comprenant les étapes suivantes consistant à :
transporter une roue comprenant une jante et un pneumatique dans un dispositif de serrage (36),
**serrer et retenir la jante** dans le dispositif de serrage (36),
mesurer et mémoriser la position angulaire de caractéristiques de marquage sur la jante et sur le pneumatique au moyen d'un dispositif de mesure,
calculer un angle différentiel au moyen d'une unité d'analyse et de commande,
enserrer la roue avec une pince (2) disposée sur un dispositif de manipulation (1) qui comprend un entraînement rotatif positionnable et des dispositifs de décollage destinés à décoller de la jante les talons de pneu,
décoller les talons de pneu des sièges de la jante à l'aide des dispositifs de décollage de la pince (2),
faire tourner le pneumatique au moyen de la pince (2) de l'angle différentiel calculé par commande de l'entraînement rotatif de la pince (2) au moyen de l'unité d'analyse et de commande,
déplacer à nouveau les dispositifs de décollage dans la position de départ et desserrer le dispositif de serrage (36),
sortir la roue du dispositif de serrage, **caractérisé en ce que** la roue est transportée à l'aide de la pince (2) dans le dispositif de serrage (36) et/ou à l'extérieur du dispositif de serrage (36),

11. Procédé selon la revendication 10, **caractérisé en ce que** le décollage d'un talon de pneu s'effectue par soulèvement et/ou abaissement de la pince (2).
